# EUROPEAN PATENT SPECIFICATION

(11) **EP 3 239 459 B1**
(45) Date of publication and mention of the grant of the patent: **02.01.2019**
(21) Application number: 17168737.9
(22) Date of filing: 28.04.2017
(51) Int. Cl.: F01D 5/14, F01D 9/04

(54) **EFFICIENT LOW PRESSURE RATIO PROPULSOR STAGE FOR GAS TURBINE ENGINES**
EFFIZIENTE PROPULSORSTUFE MIT NIEDRIGEM DRUCKVERHÄLTNIS FÜR GASTURBINENMOTOREN
ÉTAGE DE PROPULSEUR EFFICACE À RAPPORT BASSE PRESSION POUR MOTEURS DE TURBINE À GAZ

(30) Priority: 29.04.2016 US 201615143412
(43) Date of publication of application: 01.11.2017
(73) Proprietor: United Technologies Corporation, Farmington, CT 06032 (US)
(72) Inventor: ROSE, Becky E., Colchester, CT 06415 (US)
(74) Representative: Dehns

(56) References cited:
- EP-A1- 2 428 644
- EP-A2- 1 712 738
- EP-A2- 2 383 434
- EP-A2- 3 070 266
- US-A1- 2015 233 250

## Description

### BACKGROUND

This disclosure relates generally to a propulsor for gas turbine engines, and more particularly to a propulsor having a low solidity guide vane arrangement.

Gas turbine engines can include a propulsor, a compressor section, a combustor section and a turbine section. The propulsor includes fan blades for compressing a portion of incoming air to produce thrust and also for delivering a portion of air to the compressor section. Air entering the compressor section is compressed and delivered into the combustor section where it is mixed with fuel and ignited to generate a high-speed exhaust gas flow. The high-speed exhaust gas flow expands through the turbine section to drive the compressor section and the propulsor.

Some propulsors include guide vanes positioned in a bypass flow path downstream of the fan blades. The guide vanes direct the bypass airflow from the fan blades before being ejected from the bypass flow path.

US 2015/233250 A1 discloses a prior art propulsor as set forth in the preamble of claim 1.

EP 2428644 A1 discloses a prior art airfoil.

### SUMMARY

According to the present invention, there is provided a propulsor for a gas turbine engine according to claim 1.

In a further non-limiting embodiment of any of the foregoing propulsor embodiments, the row of guide vanes includes a vane quantity (VQ) of guide vanes that is between 14.0 and 40.0.

In a further non-limiting embodiment of any of the foregoing propulsor embodiments, the vane quantity (VQ) is no greater than 38.

In a further non-limiting embodiment of any of the foregoing propulsor embodiments, the vane quantity (VQ) is no less than 20.

In a further non-limiting embodiment of any of the foregoing propulsor embodiments, the row of guide vanes includes a vane quantity (VQ) of guide vanes, the row of propulsor blades includes a blade quantity (BQ) of propulsor blades, and a ratio of VQ/BQ is between 2.2 and 2.5.

In a further non-limiting embodiment of any of the foregoing propulsor embodiments, the blade quantity (BQ) is no greater than 20.

In a further non-limiting embodiment of any of the foregoing propulsor embodiments, the first span position corresponds to a midspan of the corresponding guide vane.

There is further provided a gas turbine engine according to claim 6.

In a non-limiting embodiment, the first span position corresponds to a midspan of the corresponding guide vane.

In a further non-limiting embodiment of any of the foregoing embodiments, the row of propulsor blades is configured to define a total pressure ratio across the propulsor blades alone of between 1.1 and 1.35.

In a further non-limiting embodiment of any of the foregoing embodiments, a geared architecture is configured to drive the rotor at a different speed than the turbine section.

In a further non-limiting embodiment of any of the foregoing embodiments, the row of guide vanes includes a vane quantity (VQ) of guide vanes, the row of propulsor blades includes a blade quantity (BQ) of propulsor blades, and a ratio of VQ/BQ is between 2.2 and 2.5.

In a further non-limiting embodiment of any of the foregoing embodiments, the row of propulsor blades is configured to define a total pressure ratio across the propulsor blades alone of equal to or less than 1.35.

There is provided a method of designing a gas turbine engine according to claim 12.

In a non-limiting embodiment of the foregoing, the method includes providing a geared architecture configured to drive the rotor at a different speed than the turbine section. The row of propulsor blades is configured to define a total pressure ratio across the propulsor blades alone of equal to or less than 1.35.

In a further non-limiting embodiment of any of the foregoing embodiments, the row of guide vanes includes a vane quantity (VQ) of guide vanes, the row of propulsor blades includes a blade quantity (BQ) of propulsor blades, and a ratio of VQ/BQ is less than or equal to 2.5.

These and other features of this disclosure will be better understood upon reading the following specification and drawings, the following of which is a brief description.

### BRIEF DESCRIPTION OF THE DRAWINGS

Figure 1 illustrates a gas turbine engine.
Figure 2 is a perspective cutaway view of a propulsor.
Figure 3A is a schematic view of airfoil span positions for a propulsor blade.
Figure 3B is a schematic view of airfoil span positions for a guide vane.
Figure 4 is a schematic view of adjacent propulsor blades and adjacent guide vanes depicting a chord and a leading edge gap, or circumferential pitch of the adjacent propulsor blades and adjacent guide vanes.

### DETAILED DESCRIPTION

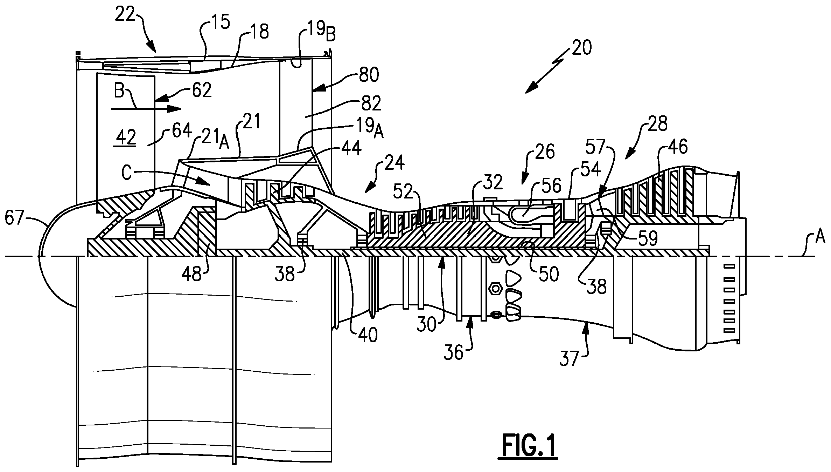

Figure 1 schematically illustrates a gas turbine engine 20. The gas turbine engine 20 is disclosed herein as a two-spool turbofan that generally incorporates a propulsor or fan section 22, a compressor section 24, a combustor section 26 and a turbine section 28. Alternative engines might include an augmentor section (not shown) among other systems or features. The fan section 22 drives air along a bypass flow path B in a bypass duct 18 defined within a fan case 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than or equal to about six, with an example embodiment being greater than about ten, the geared architecture 48 is an epicyclic gear train, such as a star gear system, a planetary gear system or other gear system, with a gear reduction ratio of greater than or equal to about 2.3 and the low pressure turbine 46 has a pressure ratio that is greater than about five. In one disclosed embodiment, the engine 20 bypass ratio is greater than or equal to about ten, the fan diameter is significantly larger than that of the low pressure compressor 44, and the low pressure turbine 46 has a pressure ratio that is greater than about five. The engine 20 in one example is a high-bypass geared aircraft engine. In another example, the engine 20 bypass ratio is greater than or equal to about twelve, the geared architecture 48 has a gear reduction ratio of greater than about 2.6 and the low pressure turbine 46 has a pressure ratio that is greater than about five. In some examples, the bypass ratio is less than or equal to about forty, or more narrowly less than or equal to about thirty. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. In examples, the gear reduction ratio is less than about 5.0, or less than about 4.0, such as between about 2.4 and about 3.1. It should be understood, however, that the above parameters are only exemplary of one embodiment of a geared architecture engine and that the present disclosure is applicable to other gas turbine engines including direct drive or non-geared turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 m). The flight condition of 0.8 Mach and 35,000 ft (10,668 m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than or equal to about 1.50, with an example embodiment being less than or equal to about 1.45. In some examples, the fan pressure ratio is between about 1.1 and about 1.35. For the purposes of this disclosure, the term "pressure ratio" means a ratio of the total pressures exiting the propulsor blades divided by the total pressure measured at the entering of the blade row at a bucket cruise condition. For the purposes of this disclosure, the term "about" means ±3% unless otherwise indicated. "Low corrected fan tip speed" is the actual fan tip speed in ft/sec divided by an industry standard temperature correction of [(Tram °R) / (518.7 °R)]^{0.5} (where °R = K x 9/5). The "Low corrected fan tip speed" as disclosed herein according to one non-limiting embodiment is less than about 1200 ft / second (365.8 m/s), or more narrowly less than about 1150 ft / second (350.5 m/s).

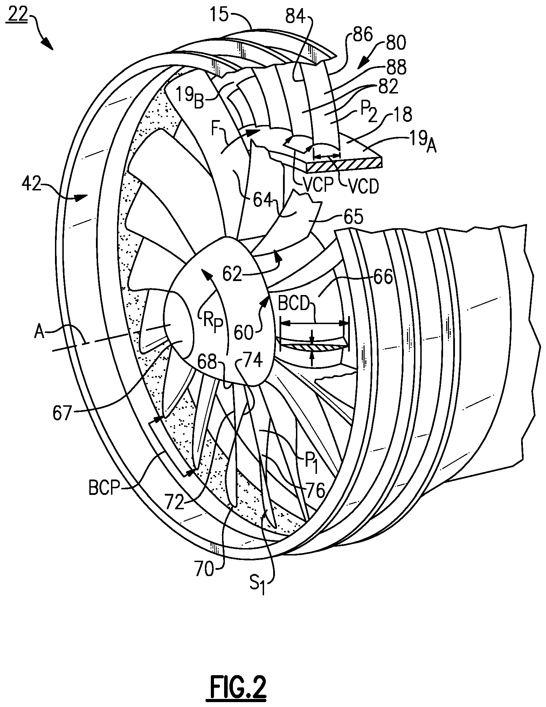

Referring to Figure 2, a perspective view of the propulsor 22 is shown. The fan 42 includes a rotor 60 having at least one row 62 of airfoils or propulsor blades 64 that are circumferentially distributed about, and are supported by, the hub 66. The hub 66 is rotatable about the engine axis A in a direction Rp, which may be clockwise or counter-clockwise. A spinner 67 is supported relative to the hub 66 to provide an aerodynamic inner flow path into the fan section 22.

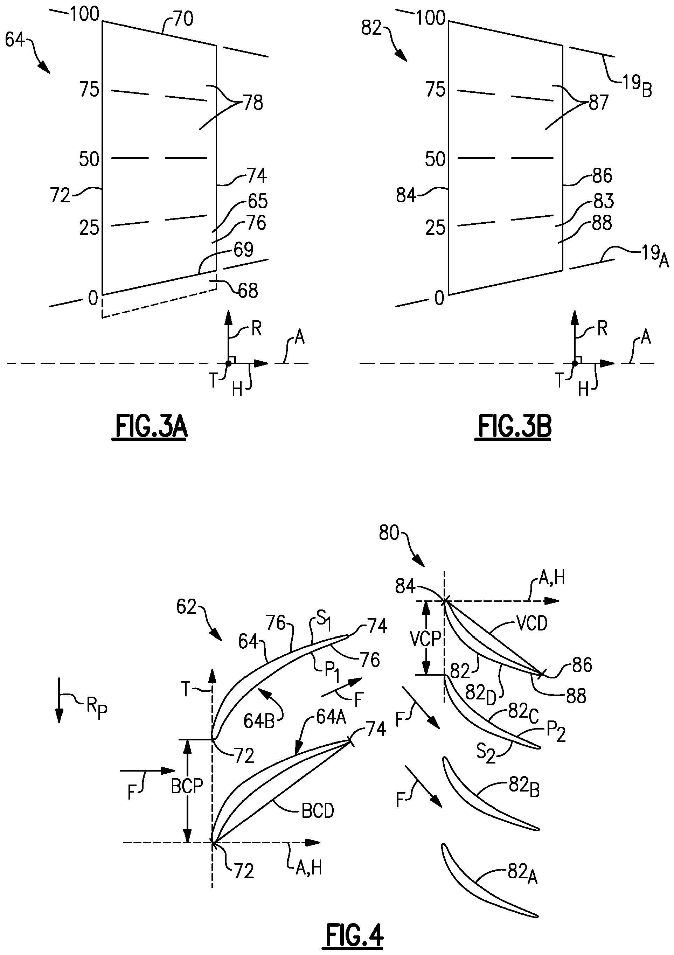

Referring to Figure 3A, with continuing reference to Figure 2, each of the propulsor blades 64 includes an airfoil body 65 that extends in a generally spanwise or radial direction R from the hub 66 between a root 68, coupled to the hub 66, and a tip 70. Each airfoil body 65 extends axially in a chordwise direction H between a blade leading edge 72 and a blade trailing edge 74, and extends circumferentially in a thickness direction T between a first pressure side P₁ and a first suction side S₁. For the purposes of this disclosure, the term "generally radial direction" means a direction having a major component that extends generally from or toward an axis of rotation of the propulsor blades 64 and vanes 82, which in the illustrated example coincides with the engine central longitudinal axis A. It should be understood that the generally radial direction R can include a minor component in an axial and/or circumferential directions such that the propulsor blades 64 have a desired amount of sweep and/or lean, for example.

The airfoil body 65 of each propulsor blade 64 has an exterior blade surface 76 providing a contour that extends in the chordwise direction H between the blade leading edge 72 and the blade trailing edge 74. The exterior blade surface 76 generates lift based upon its geometry and directs flow along the core flow path C and bypass flow path B. The propulsor blade 64 may be constructed from a composite material, or an aluminum or titanium alloy, or a combination of one or more of these. Abrasion-resistant coatings or other protective coatings may be applied to the propulsor blade 64.

Referring to Figure 3B, with continuing reference to Figure 2, the propulsor 22 includes at least one row 80 of turning or exit guide vanes 82. The guide vanes 82 are positioned in the bypass flow path B axially aft of the row 62 of propulsor blades 64 relative to the engine axis A. Each of the guide vanes 82 includes an airfoil body 83 that extends in the generally spanwise or radial direction R between inner and outer surfaces 19_{A}, 19_{B} of duct 18, axially in the chordwise direction H between a vane leading edge 84 and a vane trailing edge 86, and circumferentially in the thickness direction T between a second pressure side P₂ and a second suction side S₂. The chordwise direction H may be substantially parallel or transverse to the engine axis A. The generally radial direction R can be substantially perpendicular or transverse to the engine axis A. Inner surfaces 19_{A} of the duct 18 can be provided by core engine case 21 at a location downstream of splitter 21_{A}.

The airfoil body 83 of each guide vane 82 has an exterior vane surface 88 providing a contour that extends in the chordwise direction H between the vane leading edge 84 and the vane trailing edge 86. The exterior vane surface 88 can be contoured to direct flow F compressed by the propulsor blades 64 through the bypass flow path B. The guide vanes 82 can be constructed from a metal, metal alloy, or composite material, for example. The guide vanes 82 can serve as a structural component to transfer loads between the fan case 15 and the engine static structure 36. Although the propulsor 22 of Figure 2 is shown as a single propulsor stage having one row 62 of propulsor blades 64 and one row 80 of guide vanes 82, it should be appreciated that the propulsor 22 can be configured to have more than one row of propulsor blades 64 and/or guide vanes 82 with one or more of the rows (e.g., first or last row) arranged to define any of the quantities disclosed herein.

Figures 3A and 3B schematically illustrated span positions of propulsor blade 64 and guide vane 82, respectively. Span positions are schematically illustrated from 0% to 100% in 25% increments, for example, to define a plurality of sections 78 of the propulsor blade 64 and a plurality of sections 87 of the guide vane 82. Each section 78, 87 at a given span position is provided by a conical cut that corresponds to the shape of segments of the bypass flowpath B or the core flow path C, as shown by the large dashed lines.

In the case of a propulsor blade 64 with an integral platform, the 0% span position (or zero span) corresponds to the generally radially innermost location where airfoil body 65 meets the fillet joining the airfoil body 65 to the platform 69. In the case of a propulsor blade 64 without an integral platform, the 0% span position corresponds to the generally radially innermost location where the discrete platform 69 meets the exterior blade surface 76 of the airfoil body 65. A 100% span position (or full span) corresponds to section 78 of the propulsor blade 64 at the tip 70. The 50% position (or midspan) corresponds to a generally radial position halfway between the 0% and 100% span positions of the airfoil body 65.

The guide vane 82 has an airfoil body 83 which extends generally radially between inner and outer surfaces 19_{A}, 19_{B} of the duct 18. The 0% span position corresponds to the generally radially innermost location where the exterior vane surface 88 of the airfoil body 83 meets the inner surfaces 19_{A} of the duct 18. The 100% span position corresponds to the generally radially outermost location where the exterior vane surface 88 of the airfoil body 83 meets the outer surfaces 19_{B} of the duct 18. The 50% span position (or midspan) corresponds to a generally radial position halfway between the 0% and 100% span positions of the airfoil body 83. Airfoil geometric shapes, stacking offsets, chord profiles, stagger angles, axial sweep and dihedral angles, and/or tangential lean angles, bow, or other three-dimensional geometries, among other associated features, can be incorporated individually or collectively to the propulsor blades 64 and/or guide vanes 82 to improve characteristics such as aerodynamic efficiency, structural integrity, and vibration mitigation, for example.

Figure 4 shows an isolated view of a pair of adjacent propulsor blades 64 of the propulsor 22 designated as blades 64A/64B, and four adjacent guide vanes 82 of the propulsor 22 designated as guide vanes 82A/82B/82C/82D. Each blade 64A/64B is sectioned at a first generally radial position between the root 68 and the tip 70, and each vane 82A/82B/82C/82D is sectioned at a second generally radial position between inner and outer surfaces 19A/19B of the duct 18. The first and second generally radial positions may be the same (e.g., both at 25%, 50% or 100% span) or can differ (e.g., one at 50% and the other at 100% span).

A blade chord, represented by blade chord dimension (BCD), is a straight line that extends between the blade leading edge 72 and the blade trailing edge 74 of the propulsor blade 64. The blade chord dimension (BCD) may vary along the span of the propulsor blade 64. The row 62 of propulsor blades 64 defines a circumferential gap, represented as blade circumferential pitch (BCP), which is equivalent to an arc distance between the blade leading edges 72 of neighboring or adjacent propulsor blades 64 for a corresponding span position. In alternative examples, blade circumferential pitch (BCP) is defined relative to another position along the exterior blade surface 76 of the propulsor blades 64, such as midchord or the blade trailing edges 74.

A vane chord, represented by vane chord dimension (VCD), is a straight line that extends between the vane leading edge 84 and the vane trailing edge 86 of the guide vane 82. The vane chord dimension (VCD) may vary along the span of the guide vane 82. The row 80 of guide vanes 82 defines a circumferential gap, represented as vane circumferential pitch (VCP), which is equivalent to an arc distance between the vane leading edges 84 of neighboring or adjacent guide vanes 82 for a corresponding span position. In alternative examples, vane circumferential pitch (VCP) is defined at another position along the exterior vane surface 88 of the guide vanes 82, such as midchord or the vane trailing edge 86.

Each of the blade circumferential pitch (BCP) and vane circumferential pitch (VCP) is a function of propulsor blade count and guide vane count, respectively. The row 62 of propulsor blades 64 includes a blade quantity (BQ) of propulsor blades, such as 20 or fewer propulsor blades, or more narrowly 16 or fewer propulsor blades. In some examples, the blade quantity (BQ) includes 10 or more blades, or more narrowly between 12 to 18 blades, or between 14 and 16 blades. The row 80 of guide vanes 82 includes a vane quantity (VQ) of guide vanes, such as 40 or fewer guide vanes. In some examples, the vane quantity (VQ) is 38 or fewer guide vanes, or more narrowly 20 or more guide vanes, such as between 32 and 38 guide vanes. In an example, the vane quantity (VQ) is 30 or less guide vanes, such as between 20 and 24 guide vanes. In some examples, the ratio of VQ/BQ is at least about 2.4. In other examples, a ratio of VQ/BQ is between 2.0 and 2.6, or more narrowly between 2.2 and 2.5.

Each of the rows 62, 80 establishes a ratio of chord to gap, which is referred to as solidity. The row 62 of propulsor blades 64 has a blade solidity (BR) defined as BCD/BCP. In some examples, the blade solidity (BR) at tips 70 or full span is equal to or greater than about 0.6 and less than or equal to about 1.1. In further examples, the blade solidity (BR) at full span is equal to or greater than about 0.6, and is less than or equal to about 0.9. The blade solidity (BR) may be substantially the same at each span position, or may differ. In alternative examples, the blade solidity (BR) is taken at a different span position than full span, such as midspan, and can include any of the solidity values disclosed herein. In one example, the blade solidity (BR) is an average solidity at each of the span positions, or an average of a subset of the span positions such as between the 25% and 75% span positions.

The row 80 of guide vanes 82 has a vane solidity (VR) defined as VCD/VCP. The vane solidity (VR) can be calculated throughout the span, and in some embodiments may be defined at the midspan or an average span of the guide vanes 82, for example. In some examples, the vane solidity (VR) at midspan of at least two, or each, of the guide vanes 82 is equal to or greater than about 0.7, or more narrowly equal to or greater than about 0.8, and is less than or equal to about 1.43. In examples, the vane solidity (VR) is less than or equal to about 1.3, or more narrowly less than or equal to about 1.2. In some examples, the vane solidity (VR) at midspan is equal to or greater than about 0.85 or 0.9, more narrowly between about 1.1 and about 1.40, or even more narrowly between about 1.2 and about 1.3. The vane quantity (VQ) can be selected to establish a ratio of VQ/VR that is between about 14.0 and about 40.0, more narrowly less than about 38.0, or between 20.0 and 30.0, for example. The vane solidity (VR) may be substantially the same at each span position, or may differ. In alternative examples, the vane solidity (VR) is taken at a different span position, such as the 100% span position, and can include any of the solidity values disclosed herein. In one example, the vane solidity (BR) is an average solidity at each of the span positions, or an average of a subset of the span positions such as between the 25% and 75% span positions.

In examples, vane solidity (VR) varies in the generally radial direction R and includes any of the quantities disclosed herein. In some examples, the vane solidity (VR) at 0% span and/or 100% span is greater than 1.43, and can be less than 1.5. In other examples, the vane solidity (VR) at 0% span is between about 2.0 and about 3.3, the vane solidity (VR) at midspan is between about 1.14 and about 1.67, such as less than 1.43, and the vane solidity (VR) at 100% span is between about 0.8 and about 1.25.

The low solidity arrangement of the propulsor blades 64 and the guide vanes 82 reduces duct losses, increases aerodynamic performance and propulsive efficiency of the propulsor 22, and reduces the weight of the engine 20, thereby reducing fuel consumption. Engines made with the disclosed architecture, and including propulsor arrangements as set forth in this application, and with modifications coming from the scope of the claims in this application, thus provide very high efficient operation, relatively high stall margins, and are compact and lightweight relative to their thrust capability. Two-spool and three-spool direct drive engine architectures can also benefit from the teachings herein.

It should be understood that relative positional terms such as "forward," "aft," "upper," "lower," "above," "below," and the like are with reference to the normal operational attitude of the vehicle and should not be considered otherwise limiting.

While this invention has been disclosed with reference to one embodiment, it should be understood that certain modifications would come within the scope of this invention as defined by the appended claims.

## Claims

1. A propulsor (22) for a gas turbine engine (20) comprising:
a case (15) including a duct (18) disposed along an axis (A) to define a flow path (B);
a rotor (60) including a row (62) of propulsor blades (64) extending in a generally radial direction (R) outwardly from a hub (66), the hub (66) rotatable about the axis (A) such that the propulsor blades (64) deliver airflow into the flow path (B); and
a row (80) of guide vanes (82) situated in the flow path (B), wherein at least two of the guide vanes (82) extend in the generally radial direction (R) between inner and outer surfaces (19_{A}, 19_{B}) of the duct (18), extend in a chordwise direction (H) between a first leading edge (84) and a first trailing edge (86) to define a vane chord dimension (VCD) at a first span position of the corresponding guide vane (82), and define a vane circumferential pitch (VCP) at the first span position of the corresponding guide vane (82) and an adjacent one of the guide vanes (82), the row (80) of guide vanes (82) has a vane solidity (VR) defined as VCD/VCP, each of the propulsor blades (64) extend in the generally radial direction (R) outwardly from a root (68) to a tip (70), extend in the chordwise direction (H) between a second leading edge (72) and a second trailing edge (74) to define a blade chord dimension (BCD) at the tip (70), and define a blade circumferential pitch (BCP) at the tip (70) of the corresponding propulsor blade (64) and an adjacent one of the propulsor blades (64), and the row (62) of propulsor blades (64) has a blade solidity (BR) defined as BCD/BCP, **characterised in that**:
the blade solidity (BR) is between 0.6 and 0.9; and
the vane solidity (VR) is between 0.7 and 1.2.

2. The propulsor (22) as set forth in claim 1, wherein the row (80) of guide vanes (82) includes a vane quantity (VQ) of guide vanes (82) that is between 14.0 and 40.0.

3. The propulsor (22) as set forth in claim 2, wherein the vane quantity (VQ) is no greater than 38.

4. The propulsor as set forth in claim 2 or 3, wherein the vane quantity (VQ) is no less than 20.

5. A gas turbine engine (20) comprising:
a turbine section (28) configured to drive a compressor section (24); and
a propulsor (22) configured to be driven by the turbine section (28), the propulsor (22) comprising:
a bypass duct (18) defining a bypass flow path (B);
a rotor (60) including a row (62) of propulsor blades (64) extending in a generally radial direction (R) outwardly from a hub (66), the propulsor blades (64) configured to deliver airflow into the bypass flow path (B); and
a row (80) of guide vanes (82) situated in the bypass flow path (B), wherein at least two of the guide vanes (82) extend generally radially between inner and outer surfaces (19_{A}, 19_{B}) of the bypass duct (18), extend in a chordwise direction (H) between a first leading edge (84) and a first trailing edge (86) to define a vane chord dimension (VCD) at a first span position of the corresponding guide vanes (82), and define a vane circumferential pitch (VCP) at the first span position of the corresponding guide vane (82) and an adjacent one of the guide vanes (82), the row (80) of guide vanes (82) has a vane solidity (VR) defined as VCD/VCP, each of the propulsor blades (64) extend in the generally radial direction (R) outwardly from a root (68) to a tip (70), extend in the chordwise direction (H) between a second leading edge (72) and a second trailing edge (74) to define a blade chord dimension (BCD) at the tip (70), and define a blade circumferential pitch (BCP) at the tip (70) of the corresponding propulsor blade (64) and an adjacent one of the propulsor blades (64), and the row (62) of propulsor blades (64) has a blade solidity (BR) defined as BCD/BCP, **characterised in that**:
the blade solidity (BR) is between 0.6 and 0.9; and
the vane solidity (VR) is between 0.7 and 1.2.

6. The gas turbine engine (20) as set forth in claim 5, comprising a geared architecture (48) configured to drive the rotor (60) at a different speed than the turbine section (28).

7. The propulsor (22) or gas turbine engine (20) as set forth in any preceding claim, wherein the first span position corresponds to a midspan of the corresponding guide vane (82).

8. The propulsor (22) or gas turbine engine (20) as set forth in any preceding claim, wherein the row (80) of guide vanes (82) includes a vane quantity (VQ) of guide vanes (82), the row (62) of propulsor blades (64) includes a blade quantity (BQ) of propulsor blades (64), and a ratio of VQ/BQ is between 2.2 and 2.5.

9. The propulsor (22) as set forth in claim 8, wherein the blade quantity (BQ) is no greater than 20.

10. The propulsor (22) or gas turbine engine (20) as set forth in any preceding claim, wherein the row (62) of propulsor blades (64) is configured to define a total pressure ratio across the propulsor blades (64) alone of equal to or less than 1.35,

11. The propulsor (22) or gas turbine engine (20) as set forth in claim 10, wherein the row (62) of propulsor blades (64) is configured to define a total pressure ratio across the propulsor blades (64) alone of between 1.1 and 1.35.

12. A method of designing a gas turbine engine (20) comprising:
providing a turbine section (28) configured to drive a compressor section (24); and
providing a propulsor (22) configured to be driven by the turbine section (28), the propulsor (22) comprising:
a bypass duct (18) to define a bypass flow path (B);
a rotor (60) including a row (62) of propulsor blades (64) extending in a generally radial direction (R) outwardly from a hub (66), the propulsor blades (64) configured to deliver airflow into the bypass flow path (B); and
a row (80) of guide vanes (82) situated in the bypass flow path (B), wherein at least two of the guide vanes (82) extend in a chordwise direction (H) between a first leading edge (84) and a first trailing edge (86) to define a vane chord dimension (VCD) at a first span position of the corresponding guide vane (82), and define a vane circumferential pitch (VCP) at the first span position of the corresponding guide vane (82) and an adjacent one of the guide vanes (82), the row (80) of guide vanes (82) has a vane solidity (VR) defined as VCD/VCP, each of the propulsor blades (64) extend in the chordwise direction (H) between a second leading edge (72) and a second trailing edge (74) to define a blade chord dimension (BCD) at a second span position, and define a blade circumferential pitch (BCP) at the second span position of the corresponding propulsor blade (64) and an adjacent one of the propulsor blades (64), and the row (62) of propulsor blades (64) has a blade solidity (BR) defined as BCD/BCP,
**characterised in that**:
the blade solidity (BR) is between 0.6 and 0.9; and
the vane solidity (VR) is between 0.7 and 1.2.

13. The method as set forth in claim 12, comprising providing a geared architecture configured to drive the rotor (60) at a different speed than the turbine section (28), wherein the row (62) of propulsor blades (64) is configured to define a total pressure ratio across the propulsor blades alone of equal to or less than 1.35.

14. The method as set forth in claim 12 or 13, wherein the row (80) of guide vanes (82) includes a vane quantity (VQ) of guide vanes (82), the row of propulsor blades (64) includes a blade quantity (BQ) of propulsor blades (64), and a ratio of VQ/BQ is less than or equal to 2.5.

## Patentansprüche

1. Propulsor (22) für einen Gasturbinenmotor (20), umfassend:
ein Gehäuse (15), das einen Kanal (18) beinhaltet, der entlang einer Achse (A) angeordnet ist, um einen Strömungsweg (B) zu definieren;
einen Rotor (60), der eine Reihe (62) an Propulsorblättern (64) beinhaltet, die sich in eine im Allgemeinen radiale Richtung (R) nach außen von einer Nabe (66) erstrecken, wobei die Nabe (66) um die Achse (A) drehbar ist, sodass die Propulsorblätter (64) Luftströmung in den Strömungsweg (B) abgeben; und
eine Reihe (80) an Führungsschaufeln (82), die sich in dem Strömungsweg (B) befinden, wobei sich zumindest zwei der Führungsschaufeln (82) in die im Allgemeinen radiale Richtung (R) zwischen Innen- und Außenflächen (19_{A}, 19_{B}) des Kanals (18) erstrecken, sich in eine Profilsehnenrichtung (H) zwischen einer ersten Vorderkante (84) und einer ersten Hinterkante (86) erstrecken, um eine Schaufelsehnenabmessung (VCD) an einer ersten Spannposition der entsprechenden Führungsschaufel (82) zu definieren, und eine Schaufelumfangsteilung (VCP) an der ersten Spannposition der entsprechenden Führungsschaufel (82) und einer benachbarten der Führungsschaufeln (82) definieren, wobei die Reihe (80) an Führungsschaufeln (82) eine Schaufelsolitiät (VR) aufweist, die als VCD/VCP definiert ist, wobei sich jedes der Propulsorblätter (64) in die im Allgemeinen radiale Richtung (R) nach außen von einer Wurzel (68) einer Spitze (70) erstreckt, sich in die Profilsehnenrichtung (H) zwischen einer zweiten Vorderkante (72) und einer zweiten Hinterkante (74) erstreckt, um eine Blattsehnenabmessung (BCD) an der Spitze (70) zu definieren, und eine Blattumfangsteilung (BCP) an der Spitze (70) des entsprechenden Propulsorblattes (64) und einem benachbarten der Propulsorblätter (64) definiert, und die Reihe (62) an Propulsorblättern (64) eine Blattsolidität (BR) aufweist, die als BCD/BCP definiert ist, **dadurch gekennzeichnet, dass**:
die Blattsolidität (BR) zwischen 0,6 und 0,9 beträgt; und
die Schaufelsolidität (VR) zwischen 0,7 und 1,2 beträgt.

2. Propulsor (22) nach Anspruch 1, wobei die Reihe (80) an Führungsschaufeln (82) eine Schaufelmenge (VQ) an Führungsschaufeln (82) beinhaltet, die zwischen 14,0 und 40,0 beträgt.

3. Propulsor (22) nach Anspruch 2, wobei die Schaufelmenge (VQ) nicht größer als 38 ist.

4. Propulsor nach Anspruch 2 oder 3, wobei die Schaufelmenge (VQ) nicht weniger als 20 ist.

5. Gasturbinenmotor (20), umfassend:
einen Turbinenabschnitt (28), der konfiguriert ist, um einen Verdichterabschnitt (24) anzutreiben; und
einen Propulsor (22), der konfiguriert ist, um von dem Turbinenabschnitt (28) angetrieben zu werden, wobei der Propulsor (22) Folgendes umfasst:
einen Umgehungskanal (18), der einen Umgehungsströmungsweg (B) definiert;
einen Rotor (60), der eine Reihe (62) an Propulsorblättern (64) beinhaltet, die sich in eine im Allgemeinen radiale Richtung (R) nach außen von einer Nabe (66) erstrecken, wobei die Propulsorblätter (64) konfiguriert sind, um Luftströmung in den Umgehungsströmungsweg (B) abzugeben; und
eine Reihe (80) an Führungsschaufeln (82), die sich in dem Umgehungsströmungsweg (B) befinden, wobei sich zumindest zwei der Führungsschaufeln (82) im Allgemeinen radial zwischen Innen- und Außenflächen (19_{A}, 19_{B}) des Umgehungskanals (18) erstrecken, sich in eine Profilsehnenrichtung (H) zwischen einer ersten Vorderkante (84) und einer ersten Hinterkante (86) erstrecken, um eine Schaufelsehnenabmessung (VCD) an einer ersten Spannposition der entsprechenden Führungsschaufeln (82) zu definieren, und eine Schaufelumfangsteilung (VCP) an der ersten Spannposition der entsprechenden Führungsschaufel (82) und einer benachbarten der Führungsschaufeln (82) definieren, wobei die Reihe (80) an Führungsschaufeln (82) eine Schaufelsolitiät (VR) aufweist, die als VCD/VCP definiert ist, wobei sich jedes der Propulsorblätter (64) in die im Allgemeinen radiale Richtung (R) nach außen von einer Wurzel (68) einer Spitze (70) erstreckt, sich in die Profilsehnenrichtung (H) zwischen einer zweiten Vorderkante (72) und einer zweiten Hinterkante (74) erstreckt, um eine Blattsehnenabmessung (BCD) an der Spitze (70) zu definieren, und eine Blattumfangsteilung (BCP) an der Spitze (70) des entsprechenden Propulsorblattes (64) und einem benachbarten der Propulsorblätter (64) definiert, und die Reihe (62) an Propulsorblättern (64) eine Blattsolidität (BR) aufweist, die als BCD/BCP definiert ist, **dadurch gekennzeichnet, dass**:
die Blattsolidität (BR) zwischen 0,6 und 0,9 beträgt; und
die Schaufelsolidität (VR) zwischen 0,7 und 1,2 beträgt.

6. Gasturbinenmotor (20) nach Anspruch 5, umfassend eine Getriebearchitektur (48), die konfiguriert ist, um den Rotor (60) bei einer anderen Drehzahl als der Turbinenabschnitt (28) anzutreiben.

7. Propulsor (22) oder Gasturbinenmotor (20) nach einem vorhergehenden Anspruch, wobei die erste Spannposition einer Mittelspanne der entsprechenden Führungsschaufel (82) entspricht.

8. Propulsor (22) oder Gasturbinenmotor (20) nach einem vorhergehenden Anspruch, wobei die Reihe (80) an Führungsschaufeln (82) eine Schaufelmenge (VQ) an Führungsschaufeln (82) beinhaltet, die Reihe (62) an Propulsorblättern (64) eine Blattmenge (BQ) an Propulsorblättern (64) beinhaltet und ein Verhältnis von VQ/BQ zwischen 2,2 und 2,5 beträgt.

9. Propulsor (22) nach Anspruch 8, wobei die Blattmenge (BQ) nicht größer als 20 ist.

10. Propulsor (22) oder Gasturbinenmotor (20) nach einem vorhergehenden Anspruch, wobei die Reihe (62) an Propulsorblättern (64) konfiguriert ist, um ein Gesamtdruckverhältnis durch die Propulsorblätter (64) alleine von gleich oder weniger als 1,35 zu definieren,

11. Propulsor (22) oder Gasturbinenmotor (20) nach Anspruch 10, wobei die Reihe (62) an Propulsorblättern (64) konfiguriert ist, um ein Gesamtdruckverhältnis durch die Propulsorblätter (64) alleine zwischen 1,1 und 1,35 zu definieren.

12. Verfahren zur Gestaltung eines Gasturbinenmotors (20), umfassend:
Bereitstellen eines Turbinenabschnitts (28), der konfiguriert ist, um einen Verdichterabschnitt (24) anzutreiben; und
Bereitstellen eines Propulsors (22), der konfiguriert ist, um von dem Turbinenabschnitt (28) angetrieben zu werden, wobei der Propulsor (22) Folgendes umfasst:
einen Umgehungskanal (18), um einen Umgehungsströmungsweg (B) zu definieren;
einen Rotor (60), der eine Reihe (62) an Propulsorblättern (64) beinhaltet, die sich in eine im Allgemeinen radiale Richtung (R) nach außen von einer Nabe (66) erstrecken, wobei die Propulsorblätter (64) konfiguriert sind, um Luftstrom in den Umgehungsströmungsweg (B) abzugeben; und
eine Reihe (80) an Führungsschaufeln (82), die sich in dem Umgehungsströmungsweg (B) befinden, wobei sich zumindest zwei der Führungsschaufeln (82) in eine Profilsehnenrichtung (H) zwischen einer ersten Vorderkante (84) und einer ersten Hinterkante (86) erstrecken, um eine Schaufelsehnenabmessung (VCD) an einer ersten Spannposition der entsprechenden Führungsschaufel (82) zu definieren, und eine Schaufelumfangsteilung (VCP) an der ersten Spannposition der entsprechenden Führungsschaufel (82) und einer benachbarten der Führungsschaufeln (82) definieren, wobei die Reihe (80) an Führungsschaufeln (82) eine Schaufelsolitiät (VR) aufweist, die als VCD/VCP definiert ist, wobei sich jedes der Propulsorblätter (64) in die Profilsehnenrichtung (H) zwischen einer zweiten Vorderkante (72) und einer zweiten Hinterkante (74) erstreckt, um eine Blattsehnenabmessung (BCD) an einer zweiten Spannposition zu definieren, und eine Blattumfangsteilung (BCP) an der zweiten Spannposition des entsprechenden Propulsorblattes (64) und einem benachbarten der Propulsorblätter (64) definiert, und die Reihe (62) an Propulsorblättern (64) eine Blattsolidität (BR) aufweist, die als BCD/BCP definiert ist,
**dadurch gekennzeichnet, dass**:
die Blattsolidität (BR) zwischen 0,6 und 0,9 beträgt; und
die Schaufelsolidität (VR) zwischen 0,7 und 1,2 beträgt.

13. Verfahren nach Anspruch 12, umfassend das Bereitstellen einer Getriebearchitektur, die konfiguriert ist, um den Rotor (60) bei einer anderen Drehzahl als der Turbinenabschnitt (28) anzutreiben, wobei die Reihe (62) an Propulsorblättern (64) konfiguriert ist, um ein Gesamtdruckverhältnis durch die Propulsorblätter alleine von gleich oder weniger als 1,35 zu definieren.

14. Verfahren nach Anspruch 12 oder 13, wobei die Reihe (80) an Führungsschaufeln (82) eine Schaufelmenge (VQ) an Führungsschaufeln (82) beinhaltet, die Reihe an Propulsorblättern (64) eine Blattmenge (BQ) an Propulsorblättern (64) beinhaltet und ein Verhältnis von VQ/BQ weniger als oder gleich 2,5 ist.

## Revendications

1. Propulseur (22) pour un moteur de turbine à gaz (20) comprenant :
un boîtier (15) comprenant un conduit (18) disposé le long d'un axe (A) pour définir un trajet de flux (B) ;
un rotor (60) comprenant une rangée (62) de pales de propulseur (64) s'étendant dans une direction généralement radiale (R) vers l'extérieur depuis un moyeu (66), le moyeu (66) pouvant tourner autour de l'axe (A) de sorte que les pales de propulseur (64) distribuent un flux d'air dans le trajet de flux (B) ; et
une rangée (80) d'aubes directrices (82) situées dans le trajet de flux (B), dans lequel au moins deux des aubes directrices (82) s'étendent dans la direction généralement radiale (R) entre des surfaces intérieure et extérieure (19_{A}, 19_{B}) du conduit (18), s'étendent dans une direction dans le sens de la corde (H) entre un premier bord d'attaque (84) et un premier bord de fuite (86) pour définir une dimension de corde d'aube (VCD) à une première position d'envergure de l'aube directrice correspondante (82), et définir un pas circonférentiel d'aube (VCP) à la première position d'envergure de l'aube directrice correspondante (82) et d'une aube adjacente des aubes directrices (82), la rangée (80) d'aubes directrices (82) a une solidité d'aube (VR) définie comme VCD/VCP, chacune des pales de propulseur (64) s'étendent dans la direction généralement radiale (R) vers l'extérieur d'une racine (68) à une pointe (70), s'étendent dans la direction dans le sens de la corde (H) entre un deuxième bord d'attaque (72) et un deuxième bord de fuite (74) pour définir une dimension de corde de pale (BCD) à la pointe (70), et définir un pas circonférentiel de pale (BCP) à la pointe (70) de la pale de propulseur correspondante (64) et d'une pale adjacente des pales de propulseur (64), et la rangée (62) de pales de propulseur (64) a une solidité de pale (BR) définie comme BCD/BCP, **caractérisé en ce que** :
la solidité de pale (BR) est entre 0,6 et 0,9 ; et
la solidité d'aube (VR) est entre 0,7 et 1,2.

2. Propulseur (22) selon la revendication 1, dans lequel la rangée (80) d'aubes directrices (82) comprend une quantité d'aubes (VQ) d'aubes directrices (82) qui est entre 14,0 et 40,0.

3. Propulseur (22) selon la revendication 2, dans lequel la quantité d'aubes (VQ) n'est pas supérieure à 38.

4. Propulseur selon la revendication 2 ou 3, dans lequel la quantité d'aubes (VQ) n'est pas inférieure à 20.

5. Moteur de turbine à gaz (20) comprenant :
une section turbine (28) configurée pour entraîner une section compresseur (24) ; et
un propulseur (22) configuré pour être entraîné par la section turbine (28), le propulseur (22) comprenant :
un conduit de dérivation (18) définissant un trajet de flux de dérivation (B) ;
un rotor (60) comprenant une rangée (62) de pales de propulseur (64) s'étendant dans une direction généralement radiale (R) vers l'extérieur depuis un moyeu (66), les pales de propulseur (64) étant configurées pour distribuer un flux d'air dans le trajet de flux de dérivation (B) ; et
une rangée (80) d'aubes directrices (82) situées dans le trajet de flux de dérivation (B), dans lequel au moins deux des aubes directrices (82) s'étendent généralement radialement entre des surfaces intérieure et extérieure (19_{A}, 19_{B}) du conduit de dérivation (18), s'étendent dans une direction dans le sens de la corde (H) entre un premier bord d'attaque (84) et un premier bord de fuite (86) pour définir une dimension de corde d'aube (VCD) à une première position d'envergure des aubes directrices correspondantes (82), et définir un pas circonférentiel d'aube (VCP) à la première position d'envergure de l'aube directrice correspondante (82) et d'une aube adjacente des aubes directrices (82), la rangée (80) d'aubes directrices (82) a une solidité d'aube (VR) définie comme VCD/VCP, chacune des pales de propulseur (64) s'étendent dans la direction généralement radiale (R) vers l'extérieur d'une racine (68) à une pointe (70), s'étendent dans la direction dans le sens de la corde (H) entre un deuxième bord d'attaque (72) et un deuxième bord de fuite (74) pour définir une dimension de corde de pale (BCD) à la pointe (70), et définir un pas circonférentiel de pale (BCP) à la pointe (70) de la pale de propulseur correspondante (64) et d'une pale adjacente des pales de propulseur (64), et la rangée (62) de pales de propulseur (64) a une solidité de pale (BR) définie comme BCD/BCP, **caractérisé en ce que** :
la solidité de pale (BR) est entre 0,6 et 0,9 ; et
la solidité d'aube (VR) est entre 0,7 et 1,2.

6. Moteur de turbine à gaz (20) selon la revendication 5, comprenant une architecture à engrenage (48) configurée pour entraîner le rotor (60) à une vitesse différente de celle de la section turbine (28).

7. Propulseur (22) ou moteur de turbine à gaz (20) selon une quelconque revendication précédente, dans lequel la première position d'envergure correspond à une mi-envergure de l'aube directrice correspondante (82).

8. Propulseur (22) ou moteur de turbine à gaz (20) selon une quelconque revendication précédente, dans lequel la rangée (80) d'aubes directrices (82) comprend une quantité d'aubes (VQ) d'aubes directrices (82), la rangée (62) de pales de propulseur (64) comprend une quantité de pales (BQ) de pales de propulseur (64), et un rapport de VQ/BQ est entre 2,2 et 2,5.

9. Propulseur (22) selon la revendication 8, dans lequel la quantité de pales (BQ) n'est pas supérieure à 20.

10. Propulseur (22) ou moteur de turbine à gaz (20) selon une quelconque revendication précédente, dans lequel la rangée (62) de pales de propulseur (64) est configurée pour définir un rapport de pression total à travers les seules pales de propulseur (64) égal ou inférieur à 1,35,

11. Propulseur (22) ou moteur de turbine à gaz (20) selon la revendication 10, dans lequel la rangée (62) de pales de propulseur (64) est configurée pour définir un rapport de pression total à travers les seules pales de propulseur (64) entre 1,1 et 1,35.

12. Procédé de conception d'un moteur de turbine à gaz (20) comprenant :
la fourniture d'une section turbine (28) configurée pour entraîner une section compresseur (24) ; et
la fourniture d'un propulseur (22) configuré pour être entraîné par la section turbine (28), le propulseur (22) comprenant :
un conduit de dérivation (18) pour définir un trajet de flux de dérivation (B) ;
un rotor (60) comprenant une rangée (62) de pales de propulseur (64) s'étendant dans une direction généralement radiale (R) vers l'extérieur depuis un moyeu (66), les pales de propulseur (64) étant configurées pour distribuer un flux d'air dans le trajet de flux de dérivation (B) ; et
une rangée (80) d'aubes directrices (82) situées dans le trajet de flux de dérivation (B), dans lequel au moins deux des aubes directrices (82) s'étendent dans une direction dans le sens de la corde (H) entre un premier bord d'attaque (84) et un premier bord de fuite (86) pour définir une dimension de corde d'aube (VCD) à une première position d'envergure de l'aube directrice correspondante (82), et définir un pas circonférentiel d'aube (VCP) à la première position d'envergure de l'aube directrice correspondante (82) et d'une aube adjacente des aubes directrices (82), la rangée (80) d'aubes directrices (82) a une solidité d'aube (VR) définie comme VCD/VCP, chacune des pales de propulseur (64) s'étendent dans la direction dans le sens de la corde (H) entre un deuxième bord d'attaque (72) et un deuxième bord de fuite (74) pour définir une dimension de corde de pale (BCD) à une deuxième position d'envergure, et définir un pas circonférentiel de pale (BCP) à la deuxième position d'envergure de la pale de propulseur correspondante (64) et d'une pale adjacente des pales de propulseur (64), et la rangée (62) de pales de propulseur (64) a une solidité de pale (BR) définie comme BCD/BCP,
**caractérisé en ce que** :
la solidité de pale (BR) est entre 0,6 et 0,9 ; et
la solidité d'aube (VR) est entre 0,7 et 1,2.

13. Procédé selon la revendication 12, comprenant la fourniture d'une architecture à engrenage configurée pour entraîner le rotor (60) à une vitesse différente de celle de la section turbine (28), dans lequel la rangée (62) de pales de propulseur (64) est configurée pour définir un rapport de pression total à travers les seules pales de propulseur égal ou inférieur à 1,35.

14. Procédé selon la revendication 12 ou 13, dans lequel la rangée (80) d'aubes directrices (82) comprend une quantité d'aubes (VQ) d'aubes directrices (82), la rangée de pales de propulseur (64) comprend une quantité de pales (BQ) de pales de propulseur (64), et un rapport de VQ/BQ est inférieur ou égal à 2,5.
